(19) Europäisches Patentamt
European Patent Office
Office européen des brevets

(11) **EP 2 093 898 A1**

(12) **EUROPEAN PATENT APPLICATION**

(43) Date of publication:
**26.08.2009 Bulletin 2009/35**

(51) Int Cl.:
**H04B 7/00** *(2006.01)*  **H04B 7/212** *(2006.01)*

(21) Application number: **08290058.0**

(22) Date of filing: **22.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Sequans Communications**
**92073 Paris La Défense Cedex (FR)**

(72) Inventors:
• **Lemois, Emmanuel**
**75015 Paris (FR)**

• **Buda, Fabien**
**75017 Paris (FR)**
• **Debray, Bertrand**
**78600 Maison Laffitte (FR)**

(74) Representative: **Pichat, Thierry**
**Novagraaf Technologies**
**122, rue Edouard Vaillant**
**92593 Levallois-Perret Cedex (FR)**

(54) **Scheduling-aided base station dynamic range extension**

(57)    The invention concerns an uplink wireless communication method between mobile stations (MS) and a base station (BS) configured to receive signals transmitted over a dynamic power range (DR),
the method comprising the steps consisting of:
- identifying at least one mobile station (MS#) authorized to transmit,
- determining, for a given uplink frame (UL#), a total communication time (COM_TOT_UL#),
- selecting at least one mobile station (MS#) authorized to transmit, and
- allocating to each mobile station (MS#) authorized to transmit a respective communication time (COM_MS#_UL#) equal to or less than the total communication time (COM_TOT_UL#) of said uplink frame (UL#).

According to the invention, it also comprises the steps consisting of:
- determining a plurality of time periods (T1, T2, ..., Tn), and
- for each said time period, applying a respective value of said dynamic range (DR) of said base station (BS).

FIGURE 2

**Description**

The present invention concerns wireless communication between a plurality of mobile stations and a base station, and more particularly uplink communication i.e. the transmitting of signals by at least one mobile station and the receiving thereof at the base station in the form of a frame or frames.

More precisely, the invention concerns a method for wireless communication via uplink frames between a plurality of mobile stations (MS) able to transmit signals towards a base station (BS), said base station (BS) being configured, over a dynamic power range (DR), to receive signals transmitted by at least one mobile station (MS), the method comprising the steps consisting of:

- identifying at least one mobile station (MS#) authorized to transmit,
- determining, for a given uplink frame (UL#), a total communication time (COM_TOT_UL#),
- selecting, for a given uplink frame (UL#), at least one mobile station (MS#) authorized to transmit over said uplink frame (UL#), and

allocating to each mobile station (MS#), authorized to transmit over said uplink frame (UL#), a respective communication time (COM-MS#_UL#) equal to or less than the total communication time (COM_TOT_UL#) of said uplink frame (UL#).

Each mobile station has a given received signal strength (RSS) at the base station receiver input. The received signal strength (RSS) at the base station is related to the transmission power level (TSS) at the base station and to attenuation (L) of the signal.

So that a given base station is able to receive a plurality of transmissions respectively derived from a plurality of mobile stations, the received signal strength (RSS) must lie within a certain range called a dynamic range (DR) whose extent is fixed for a given technology i.e. if the maximal and minimal values of received signal strength are respectively RSSmax and RSSmin, this gives:

$$\mathrm{DR = RSSmax - RSSmin = constant,}$$

irrespective of the values of RSSmax and RSSmin.

Therefore for a given transmission power level (TSS), a base station whose receiving power is a dynamic range (DR), is able to receive the signal if the attenuation (L) lies within a certain range (DL). In this case therefore, if the maximal and minimal values of attenuation are defined as Lmax and Lmin respectively, this gives:

$$\mathrm{DL = Lmax - Lmin = constant.}$$

In a propagation model in free space, attenuation L is calculated as follows: L = 20 Log (4nd/1) in which d is the distance in metres separating the base station from the mobile station, and 1 is the wavelength of the signal.

Typically, a mobile station can therefore only communicate over a certain distance range i.e. it cannot communicate with the base station below a minimal limit distance dist_min nor beyond a maximal limit distance dist_max respectively corresponding to the minimal Lmin and maximal Lmax attenuations.

However, most mobile stations can in fact transmit over a transmission power level range DTSS = TSSmax - TSSmin, in which TSSmax and TSSmin are respectively the maximal and minimal values of the transmission power.

With this characteristic of transmission power lying within a power range, it is possible - to a certain extent - to control the transmission power of a given mobile station, and hence to extend the attenuation range DL i.e. to extend the distance range Ddist = dist_max - dist_min in which said mobile station is able to transmit towards the base station. Said power control is called "MS transmit power control".

Typically, transmission power control is implemented either by the base station e.g. by measuring received power, or by the mobile station e.g. in TDD systems in which the transmission and receiver channels are at the same frequency but share communication time.

Conventionally, in either of the above cases, the transmitting station (mobile) sends the power at which it transmits, the receiver station (base) measures the received power and uses the result to deduce attenuation. Knowing the attenuation and the desired received signal strength, the transmitting station (mobile) is then able to adapt its transmit power level.

In the prior art, an MS transmit power control mechanism can be applied solely if the transmission power range, considering the attenuation range, is compatible with the dynamic range of received signal strength.

Additionally, it is also possible to cause the dynamic range (DR) to vary at the base station, by modifying / tuning received gain along the principle of automatic gain control (AGC) in which the measurement of received power at time t is used to predict the value of received power at time t+dt.

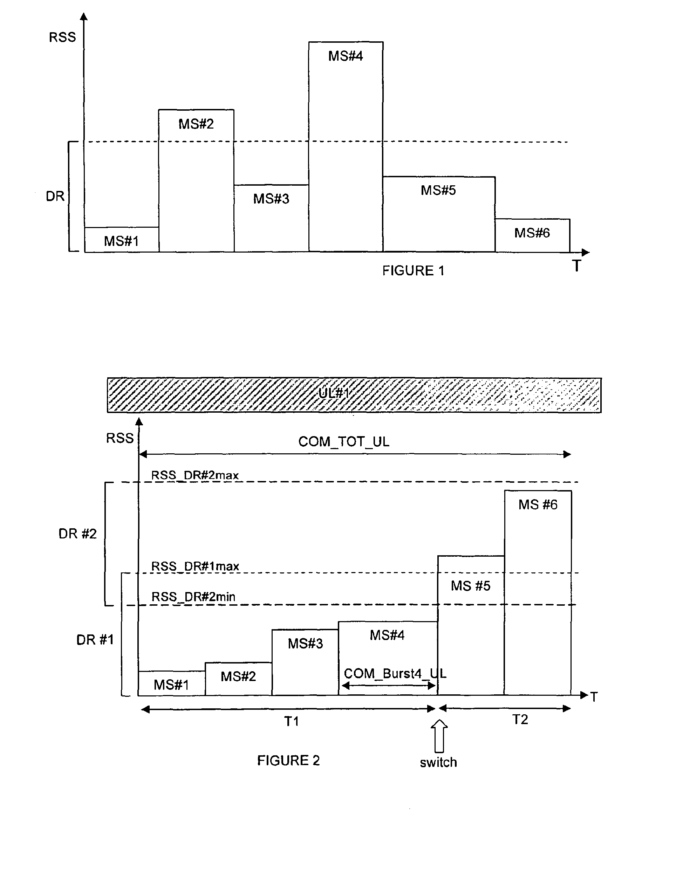

However, said automatic gain control is based on the essential assumption of the continuity of the received signal, which cannot be applied to a base station for uplink communication since, as illustrated figure 1, the signal received by a base station derived from a plurality of mobile stations is discontinuous and de-correlated (the power received from one mobile station is independent of the power received from another mobile station).

A method in which a wideband base station uses a plurality of instantaneous dynamic ranges in wireless communications is known to persons skilled in the art by the example given in the prior art document US 5,590,156.

In this document, the base station subdivides the bandwidth into a plurality of sub-bands. Each sub-band has its own dynamic range, whose extent is determined by the value of the gain of the receiving amplifier of said sub-band.

In relation to the received signal strength indication (RSSI) of a mobile station, a controller assigns a transmit frequency to the mobile station so that the mobile station communicates on a sub-band whose own dynamic range is coherent with the transmit frequency.

However, the implementation of said method requires special, cumbersome equipment particularly including a plurality of amplifiers and corresponding signal processing lines.

Furthermore, such a method only applies to frequency division multiple access systems.

The purpose of the present invention is to overcome these disadvantages by proposing a method that is simple to implement.

With this objective in mind, the method of the invention, conforming to the foregoing preamble, is essentially **characterized in that** it also comprises the steps consisting of:

- determining a plurality of time periods (T1, T2,..., Tn), and
- for each time period, applying a respective value of the dynamic range (DR) of the base station (BS).

Preferably the respective values of the dynamic range (DR) of the base station (BS) are established by applying a respective gain settings to the receiver of the base station (BS). According to the invention, the method only requires a programmable gain at the base station receiver.

Therefore, the minimal and maximal values of the dynamic range can be caused to vary over time, whilst maintaining a constant difference between them. One same base station can therefore be less sensitive to proximity/ distance effects of the base station with respect to the mobile stations, which is particularly advantageous for so-called femtocell or access point base stations.

In one embodiment, the total communication time (COM_TOT_UL#) of a given uplink frame (UL#) is equal to or less than the duration of a given time period (T1, T2, ..., Tn).

In this configuration, the gain can be modified between two successive frames for example.

In one alternative embodiment, the total communication time (COM_TOT_UL#) of a given uplink frame (UL#) is greater than the duration of a given time period (T1, T2, ..., Tn).

Preferably, within each given time period (T1, T2, ..., Tn), the mobile stations (MS#) authorized to transmit are placed in increasing or decreasing order of received signal strength (RSS) at the base station (BS).

In one embodiment, the method of the invention also comprises the steps consisting of:

- associating a capacity with each mobile station (MS#),
- grouping the authorized mobile stations in clusters per capacity, and
- allocating to each cluster a respective communication time (COM_CL#) preferably equal to or less than the total communication time (COM_TOT_UL#).

In one embodiment, the communication time allocated to a given cluster (COM-CL#) corresponds to, i.e. is equal to, a given time period (T1, T2, ..., Tn).

In one embodiment, within each given time period (T1, T2, ..., Tn), the clusters authorized to transmit are placed in increasing or decreasing order of received signal strength of said cluster(s) (RSS_CL) at the base station (BS).

In one embodiment, the capacity associated with each mobile station (MS#) for grouping in clusters comprises the received signal strength (RSS_MS#). Moreover, in one embodiment, in a Frequency Division Multiple Acces system, the RSS may be measured on a part the frequency dimension (as opposed to the entire band of the signal). In one embodiment, in a Code Division Multiple Access system, the RSS may be measured on a subset codes, i.e. on a sub-set of a code set (as opposed to the entire set).

According to another of its subject-matters, the invention concerns a computer programme comprising program code instructions to execute the steps of the method according to the invention when said program is run on a computer.

Through the invention, for a mobile station having a given range of transmission power (DTSS) and a base station having a given dynamic range (DR) of received power, it is possible to extend the attenuation range (DL) by translation, and hence the distance range (Ddist) in which said mobile station can transmit to the base station.

The invention can be used to advantage in communication methods of WI-MAX type.

Other characteristics and advantages of the present invention will become more clearly apparent on reading the following description given as an illustrative, non-limiting example with reference to the appended figures in which:

- figure 1 illustrates the power received by a base station derived from a plurality of mobile stations, in relation to time,
- figure 2 illustrates one embodiment of the method according to the invention,
- figure 3 illustrates another embodiment of the method of the invention, and
- figure 4 shows the changes in received signal strength in relation to the distance between one same base station and one same mobile station, for two dynamic ranges.

Figure 1 illustrates the changes in power received by a base station in relation to time, for a plurality of mobile stations, MS#1 to MS#6 respectively.

As seen above, each mobile station transmits at its own power level. The base station BS therefore receives a group of powers de-correlated with each other.

Therefore in relation to the values of its dynamic range DR, all the mobile stations whose received signal strength does not lie within said dynamic range will not be able to communicate with the base station (in this case the mobile stations MS#2 and MS#4 in figure 1).

To overcome this problem, the invention essentially proposes to cause the gain to vary at the receiving end i.e. to translate the received dynamic range in controlled manner over time i.e. to cause the values of RSSmax and RSSmin to vary so that their difference DR = RSSmax - RSSmin remains constant.

For this purpose, the respective values of the dynamic range DR of the base station BS are established by applying a respective gain to the receiver of the base station BS.

The times at which the respective gain values are applied, are determined as described below.

Preferably, the method of the invention advantageously comprises a prior step consisting of determining the received signal strength at the base station for each mobile station which may transmit towards the base station.

For this purpose, a correspondence between the identity of a mobile station and the received signal strength at the base station for this mobile station, is advantageously stored in a database which can be accessed by the base station.

The base station also comprises means:

- to identify at least one mobile station MS# authorized to transmit, e.g. by means of the above-mentioned database,
- to determine, for a given uplink frame UL#, a total communication time COM_TOT_UL#, this total time being constant over time,
- to select, for a given uplink frame UL#, at least one mobile station MS# authorized to transmit over said uplink frame UL#, particularly in relation to the dynamic range of the base station, and
- to allocate, to each mobile station MS# authorized to transmit over said uplink frame UL#, a respective communication time COM_MS#_UL#, optionally variable, equal to or less than the total communication time COM_TOT_UL# of said uplink frame UL#, e.g. by a scheduler.

Therefore, within a fixed total communication time COM_TOT_UL#, the time COM_MS#_UL# allocated to each mobile station MS# authorized to transmit over said uplink frame UL# may vary for example in relation to a possible variation in the number of mobile stations present wishing to transmit within a given time slot.

The selection of the mobile stations authorized to transmit, and the determination of the communication time allocated per mobile station, can be implemented for example in relation to service qualities, bandwidth requests and/or in relation to the received signal strength of said mobile stations at the base station.

According to the invention, the base station BS also comprises means to determine a plurality of time periods T1, T2, ..., Tn and means, for each time period T1, T2, ..., Tn, to apply a respective value of the dynamic range DR of the base station BS.

Advantageously these steps consisting of determining a plurality of time periods and of applying a respective value of the dynamic range for each time period T1, T2, ..., Tn, are performed by the means which, to each mobile station MS# authorized to transmit on said uplink frame UL#, allocate a respective communication time COM_MS#_UL#, i.e. said scheduler. Thus the base station controls the time periods in which each mobile station MS# is allowed to transmit, so that the mobile station transmission occurs in a time period when the base station dynamic range is compliant with the mobile station RSS.

Preferably, in particular when a given number of mobile stations wishing to communicate is fixed, the duration of each time period T1, T2, ..., Tn is determined after allocation of a respective communication time COM_MS#_UL# to each mobile station MS# authorized to transmit over said uplink frame UL#. In this case, each time period T1, T2, ..., Tn respectively corresponds to one or the sum of several respective communication times COM_MS#_UL#.

This configuration is illustrated figure 2, in which in addition within each given time period, here T1 and T2, the mobile stations MS# authorized to transmit are placed in increasing order of received signal strength RSS at the base station BS.

In the present case between T1 and T2, the receiver gain of the base station BS is modified to change its dynamic range over from a first configuration DR#1 = RSS_DR#1max - RSS_DR#1min to a second configuration DR#2 = RSS_DR#2max - RSS_DR#2min, in which DR#1=DR#2 and RSS_DR#1max is different from RSS_DR#2max.

In figure 2, the total communication time COM_TOT_UL of the illustrated uplink frame UL#1 is greater than the duration of a given time period, here T1 and T2.

Alternatively, in one non-illustrated embodiment, the total communication time COM_TOT_UL# of a given uplink frame UL# can be equal to or less than the duration of a given time period T1, T2, ..., Tn.

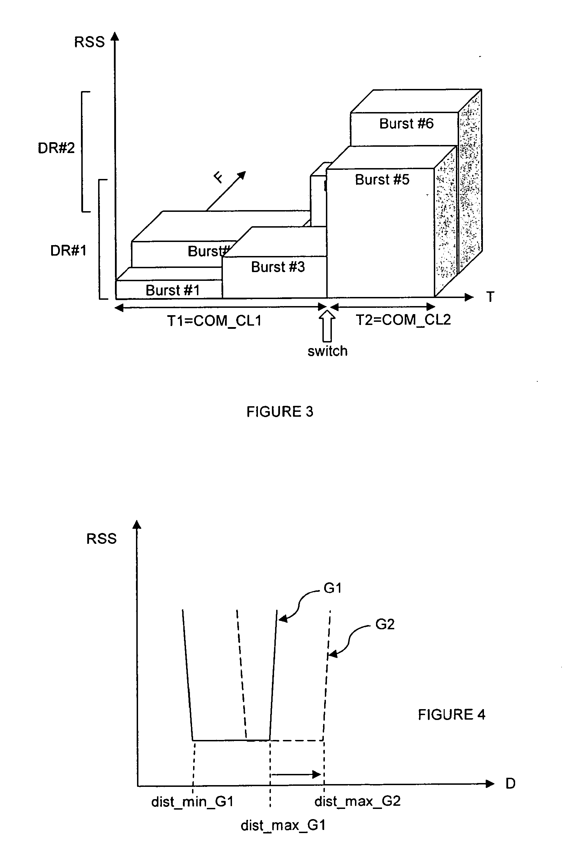

In another embodiment illustrated figure 3, a capacity is associated with each mobile station MS# (or Burst#).

Then, the authorized mobile stations can be clustered per capacity and a respective communication time COM_CL# can be allocated to each cluster, this time preferably being equal to or less than the total communication time COM_TOT_UL# and corresponding to a given time period, here T1 and T2.

The capacity associated with each mobile station MS# for clustering may comprise the received signal strength RSS# at the base station receiver input of each mobile station MS#. For instance: a first cluster CL1 comprises mobile stations having their respective received signal strength RSS# comprised within a given first interval, and a second cluster CL2 comprises mobile stations having their respective received signal strength RSS# comprised within a second given interval, different from the first given interval.

The capacity associated with each mobile station MS# (Burst#) for clustering may also comprise a frequency dimension or code dimension, here a frequency dimension F as illustrated figure 3, which is particularly useful when a plurality of mobile stations transmit at the same time using different sub-carriers e.g. in the so-called OFDMA access mode.

In one frequency division multiple access mode, a plurality of mobile stations transmit at the same time along a plurality of sub-carriers in the frequency domain.

It is then possible to define two different dynamic ranges:

- a first dynamic range corresponding to the admissible power range, for a given sub-carrier, at the base station, and
- a second dynamic range corresponding to the whole bandwidth. In this case, the received power at the base station is the sum of the individual powers respectively corresponding to the individual signal strengths of the mobile stations.

According to the invention, for each time period, a respective value of the dynamic range of the base station can be applied, for the first dynamic range as illustrated figure 3, and for the second dynamic range.

The capacity associated with each mobile station MS# for clustering may also comprise a transmission power level TSS_MS# of each mobile station, an attenuation level L_MS# of the signal transmitted by each mobile station.

As previously seen within each given time period, here T1 and T2 in figure 3, the clusters authorized to transmit are placed in increasing order of received signal strength at the base station BS.

Advantageously as illustrated figure 3, within one cluster the mobile stations authorized to transmit may also be placed in increasing order of received signal strength at the base station BS.

Therefore according to the invention, a base station provided with a programmable, variable gain receiver can modify its dynamic range over time.

A base station according to the invention can control the time periods COM_MS# at which each mobile station is authorized to transmit, over one or more uplink frames, so that transmission occurs during a time period in which the dynamic range of the base station is compatible with the received signal strength RSS of the mobile station or stations.

The invention may also be implemented in a code division multiple access mode called CDMA.

The invention is not limited to the embodiments just described.

For example a power control loop can be used for transmission by mobile stations.

As illustrated figure 4, with the invention a mobile station can therefore time-shift its dynamic range. As a result, a mobile station can communicate over a certain distance range that is longer than in the prior art.

For a first given dynamic range, corresponding to a first given gain value G1, a mobile station can only communicate over a distance range between it and the base station which lies between a minimal limit distance dist_min_G1 and a maximal limit distance dist_max_G1.

And for a second given dynamic range, corresponding to a second given gain value G2, a mobile station can only communicate over a distance range between it and the base station which lies between a minimal limit dance dist_min_G2 and a maximal limit distance dist_max_G2.

Through the invention, by causing the dynamic range of the base station to vary, i.e. by causing the gain value of its receiver to vary, e.g. from value G1 to value G2, a mobile station is then able to communicate over a distance range between it and the base station which lies between the minimal limit distance dist_min_G1 and the maximal limit distance dist_max_G2.

The invention can be used to advantage in so-called femtocell or access point base stations, in which the minimal limit distance between the base station and a mobile station is in the order of one centimetre.

**Claims**

1. Wireless communication method by uplink frames between a plurality of mobile stations (MS) able to transmit signals towards a base station (BS), said base station (BS) being configured, over a dynamic power range (DR), to receive signals transmitted by at least one mobile station (MS), the method comprising the steps consisting of:

   - identifying at least one mobile station (MS#) authorized to transmit,
   - determining, for a given uplink frame (UL#), a total communication time (COM_TOT_UL#),
   - selecting at least one mobile station (MS#) authorized to transmit over said uplink frame (UL#), and
   - allocating to each mobile station (MS#), authorized to transmit over said uplink frame (UL#), a respective communication time (COM_MS#_UL#) equal to or less than the total communication time (COM_TOT_UL#) of said uplink frame (UL#),

   **characterized in that** it also comprises the steps consisting of:

   - determining a plurality of time periods (T1, T2, ..., Tn), and
   - for each said time period, applying a respective value of said dynamic range (DR) of said base station (BS).

2. Method according to claim 1, wherein said total communication time (COM_TOT_UL#) of a given uplink frame (UL#) is equal to or less than the duration of a given time period (T1, T2, ..., Tn).

3. Method according to claim 1, wherein said total communication time (COM_TOT_UL#) of a given uplink frame (UL#) is greater than the duration of a given time period (T1, T2, ..., Tn).

4. Method according to any of the preceding claims, wherein the respective values of the dynamic range (DR) of the base station (BS) are established by applying a respective gain settings to the receiver of the base station (BS).

5. Method according to any of the preceding claims, wherein in each given time period (T1, T2, ..., Tn) the mobile stations (MS#) authorized to transmit are placed in increasing or decreasing order of received signal strength (RSS) at the base station (BS).

6. Method according to any of the preceding claims, also comprising the steps consisting of:

   - associating a capacity with each mobile station (MS#),
   - clustering the authorized mobile stations per capacity, and
   - allocating to each cluster a respective communication time (COM_CL#).

7. Method according to claim 6, wherein said communication time allocated to a given cluster (COM_CL#) corresponds to a given time period (T1, T2, ..., Tn).

8. Method according to either of claims 6 or 7, wherein in each given time period (T1, T2, ..., Tn) said clusters authorized to transmit are placed in increasing or decreasing order of received signal strength of said cluster(s) (RSS_CL) at the base station (BS).

9. Method according to any of claims 6 to 8, wherein the capacity associated with each mobile station (MS#) for clustering comprises the received signal strength (RSS_MS#).

10. Method according to claim 9, wherein said received signal strength (RSS_MS#) is measured on part of a frequency dimension.

11. Method according to claim 9, wherein said received signal strength (RSS_MS#) is measured on a sub-set of a code set.

**12.** Computer programme comprising program code instructions to implement the steps of the method according to any of the preceding claims, when said program is run on a computer.

FIGURE 1

FIGURE 2

FIGURE 3

FIGURE 4

European Patent
Office

## EUROPEAN SEARCH REPORT

Application Number

EP 08 29 0058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/30438 A (NOKIA TELECOMMUNICATIONS OY [FI]; POSTI HARRI [FI]; NIEMELAE KARI [FI]) 17 June 1999 (1999-06-17) | 1-4, 10-12 | INV.<br>H04B7/00<br>H04B7/212 |
| Y | * page 2, line 33 - line 34 *<br>* page 3, line 3 - line 8; figure 7 *<br>* page 5, line 16 - line 19 *<br>* page 6, line 32 - line 33 *<br>----- | 5-7,9 | |
| Y | DE 43 28 341 A1 (ALCATEL SEL RFT GMBH [DE]) 2 March 1995 (1995-03-02)<br>* figure 2 *<br>----- | 5 | |
| Y | EP 1 761 095 A (MATSUSHITA ELECTRIC IND CO LTD [JP]) 7 March 2007 (2007-03-07)<br>* column 8, lines 42-57 *<br>* column 9, line 1 - line 12 *<br>----- | 6,7,9 | |
| A | CN 1 355 660 A (HUAWEI TECH CO LTD [CN]) 26 June 2002 (2002-06-26)<br>* abstract *<br>----- | 1 | TECHNICAL FIELDS SEARCHED (IPC) |
| A | WO 00/39923 A (ERICSSON TELEFON AB L M [SE]) 6 July 2000 (2000-07-06)<br>* the whole document *<br>----- | 1 | H04B |

The present search report has been drawn up for all claims

| Place of search | Date of completion of the search | Examiner |
|---|---|---|
| The Hague | 4 July 2008 | Orfanos, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 29 0058

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2008

| Patent document cited in search report | | Publication date | Patent family member(s) | | Publication date |
|---|---|---|---|---|---|
| WO 9930438 | A | 17-06-1999 | AU | 750740 B2 | 25-07-2002 |
| | | | AU | 1489399 A | 28-06-1999 |
| | | | CN | 1246993 A | 08-03-2000 |
| | | | EP | 0958667 A2 | 24-11-1999 |
| | | | FI | 974452 A | 09-06-1999 |
| | | | JP | 2001511993 T | 14-08-2001 |
| | | | NO | 993805 A | 09-08-1999 |
| | | | US | 6430173 B1 | 06-08-2002 |
| DE 4328341 | A1 | 02-03-1995 | NONE | | |
| EP 1761095 | A | 07-03-2007 | BR | PI0512647 A | 25-03-2008 |
| | | | CA | 2575031 A1 | 02-02-2006 |
| | | | CN | 1985539 A | 20-06-2007 |
| | | | WO | 2006011471 A1 | 02-02-2006 |
| | | | KR | 20070038534 A | 10-04-2007 |
| CN 1355660 | A | 26-06-2002 | NONE | | |
| WO 0039923 | A | 06-07-2000 | AU | 2133400 A | 31-07-2000 |
| | | | BR | 9916512 A | 04-09-2001 |
| | | | CA | 2356699 A1 | 06-07-2000 |
| | | | US | 2002068540 A1 | 06-06-2002 |

EPO FORM P0459

For more details about this annex : see Official Journal of the European Patent Office, No. 12/82

**EP 2 093 898 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5590156 A